# EUROPÄISCHE PATENTANMELDUNG

(11) **EP 0 868 065 A2**
(43) Veröffentlichungstag der Anmeldung: **30.09.1998**
(21) Anmeldenummer: 98100496.3
(22) Anmeldetag: 14.01.1998
(51) Int. Cl.: H04M 3/42, H04M 3/38, H04M 3/54

(54) **Verfahren und Einrichtung zur Behandlung von bei einem Endgerät ankommenden Anrufen**

(30) Priorität: 27.03.1997 DE 19712949
(71) Anmelder: Deutsche Telekom AG, 53113 Bonn (DE)
(72) Erfinder: Adam, Christof, 64859 Eppertshausen (DE); Kinnen, Theo, 53879 Euskirchen (DE)

(57) **Zusammenfassung**

Bei einem Verfahren und bei einer Einrichtung zur Behandlung von bei einem Endgerät eines Telekommunikationsnetzes ankommenden Anrufen, wenn eine akustische Signalisierung von ankommenden Anrufen am Endgerät abgeschaltet ist, ist vorgesehen, daß das Endgerät bei dem ankommenden Anruf eine die abgeschaltete akustische Signalisierung kennzeichnende Signalisierung an das Telekommunikationsnetz sendet oder daß das Endgerät eine Anrufweiterleitung (Call Deflection) zu einem weiteren Endgerät mit einer im Endgerät gespeicherten Rufnummer durchführt.

## Beschreibung

Die Erfindung betrifft ein Verfahren und eine Einrichtung zur Behandlung von bei einem Endgerät eines Telekommunikationsnetzes ankommenden Anrufen, wenn eine akustische Signalisierung von ankommenden Anrufen am Endgerät abgeschaltet ist.

Bei Telefonen und anderen Telekommunikationsendgeräten kann häufig eine akustische Signalisierung abgeschaltet werden, um dem Teilnehmer "Ruhe vor dem Telefon" zu verschaffen. Bei den bisherigen Einrichtungen dieser Art erhält der anrufende Teilnehmer - im folgenden auch Anrufer genannt - keine Informationen über diesen eingestellten Zustand und ist daher der Meinung, daß der angerufene Teilnehmer sich nicht in der Nähe des Telefons befindet. Aufgabe der vorliegenden Erfindung ist es, diesen Nachteil zu vermeiden.

Bei einem ersten erfindungsgemäßen Verfahren wird diese Aufgabe dadurch gelöst, daß das Endgerät bei dem ankommenden Anruf eine die abgeschaltete akustische Signalisierung kennzeichnende Signalisierung an das Telekommunikationsnetz sendet.

Das erfindungsgemäße Verfahren kann an sich bei allen Telekommunikationsnetzen durchgeführt werden, welche eine entsprechende Signalisierung erlauben. Die Vermittlungsstellen im Telekommunikationsnetz können dann geeignete Vorgänge aktivieren. So kann bei einer Weiterbildung des erfindungsgemäßen Verfahrens vorgesehen sein, daß mit der Signalisierung eine Anrufumleitung (Call Forwarding Busy) ausgelöst wird.

Besonders vorteilhaft ist, wenn die Signalisierung im D-Kanal des ISDN erfolgt. Innerhalb des D-Kanals stehen verschiedene Möglichkeiten offen, wobei die Signalisierung auf der Schicht 3 des D-Kanals mit "DISConnect", mit "user busy" oder mit "Release" und "cause# user busy" erfolgen kann.

Der Anrufer weiß dann, daß der Angerufene zwar verfügbar ist, aber vorübergehend nicht gestört werden möchte, so daß der Anrufer sich entsprechend verhalten kann, beispielsweise mit einem erneuten Anruf länger warten kann. Damit werden unnötige Verbindungsaufbauversuche vermieden und in Telekommunikationsnetzen, bei denen bereits der Verbindungsaufbauwunsch tarifiert wird, können Kosten für den Anrufer gespart werden.

Eine andere Weiterbildung des erfindungsgemäßen Verfahrens besteht darin, daß dem Endgerät des anrufenden Teilnehmers ferner eine Textnachricht zugeführt wird. Dazu stehen im ISDN geeignete Dienste zur Verfügung, beispielsweise User to User Signalling oder User Signalling Bearer Service.

Bei einem zweiten erfindungsgemäßen Verfahren ist zur Lösung der Aufgabe vorgesehen, daß das Endgerät eine Anrufweiterleitung (Call Deflection) zu einem weiteren Endgerät mit einer im Endgerät gespeicherten Rufnummer durchführt.

Bei einer Einrichtung zur Durchführung des Verfahrens wird die Aufgabe dadurch gelöst, daß an einem als Telefon ausgebildeten Endgerät ein Bedienelement zum Abschalten der akustischen Signalisierung von ankommenden Anrufen vorgesehen ist und daß in einem Mikroprozessor ein Programm abarbeitbar ist, das die Verfahrensschritte durchführt.

Ausführungsbeispiele der Erfindung sind in der Zeichnung anhand mehrerer Figuren dargestellt und in der nachfolgenden Beschreibung näher erläutert. Es zeigt:
- Fig. 1: ein erstes Ausführungsbeispiel des erfindungsgemäßen Verfahrens,
- Fig. 2: ein zweites Ausführungsbeispiel und
- Fig. 3: ein drittes Ausführungsbeispiel.

Die Flußdiagramme stellen Teile eines meist weitaus umfangreicheren Programms eines Mikrocomputers innerhalb eines Endgerätes dar, soweit es zur Erläuterung des erfindungsgemäßen Verfahrens erforderlich ist. Andere, nicht dargestellte Teile des Programmes beziehen sich auf den Verbindungsaufbau und -abbau, die Erzeugung der akustischen Signalisierung und je nach Ausstattung des Endgerätes auf verschiedene weitere Funktionen, wie beispielsweise Rufnummernspeicher, Display-Verwaltung, Anruferliste, Wahlwiederholliste und Anrufbeantworterfunktionen.

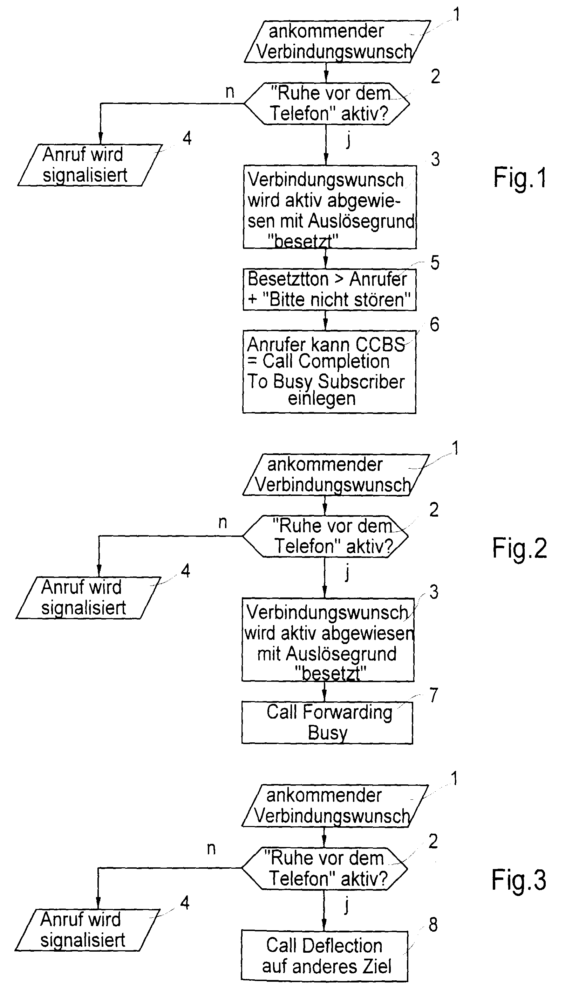

Bei den in den Figuren 1 bis 3 dargestellten Programmen wird nach dem Eintreffen eines Anrufes (ankommender Verbindungswunsch) bei 1 das Programm bei 2 in Abhängigkeit davon verzweigt, ob die Funktion "Ruhe vor dem Telefon" aktiv ist. Ist dieses nicht der Fall, wird der Anruf bei 4 dem Teilnehmer wie üblich akustisch signalisiert. Ist jedoch die Funktion "Ruhe vor dem Telefon" aktiv, wird der Verbindungswunsch aktiv mit dem Auslösegrund "besetzt" abgwiesen.

Bei 5 erhält der Anrufer den Besetztton und die Textnachricht "bitte nicht stören", sofern er über ein geeignetes Display verfügt.

Bei 6 kann der Anrufer CCBS einlegen, nämlich eine Aufforderung zu einem Rückruf.

Bei dem in Fig. 2 dargestellten Ausführungsbeispiel erfolgt bei 3 ebenfalls ein Auslösen mit dem Grund "besetzt", worauf eine zuvor eingestellte Anrufumleitung für den Bestztfall vom Telekommunikationsnetz bei 7 vorgenommen wird.

Bei dem Ausführungsbeispiel nach Fig. 3 wird nach der Verzweigung 2 bei 8 der Anruf unmittelbar auf ein anderes Ziel weitergeleitet.

## Patentansprüche

1. Verfahren zur Behandlung von bei einem Endgerät eines Telekommunikationsnetzes ankommenden Anrufen, wenn eine akustische Signalisierung von ankommenden Anrufen am Endgerät abgeschaltet ist, dadurch gekennzeichnet, daß das Endgerät bei dem ankommenden Anruf eine die abgeschaltete akustische Signalisierung kennzeichnende Signalisierung an das Telekommunikationsnetz sendet.

2. Verfahren nach Anspruch 1, dadurch gekennzeichnet, daß mit der Signalisierung eine Anrufumleitung (Call Forwarding Busy) ausgelöst wird.

3. Verfahren nach einem der Ansprüche 1 oder 2, dadurch gekennzeichnet, daß die Signalisierung im D-Kanal des ISDN erfolgt.

4. Verfahren nach Anspruch 3, dadurch gekennzeichnet, daß die Signalisierung auf der Schicht 3 des D-Kanals mit "DISConnect" erfolgt.

5. Verfahren nach Anspruch 3, dadurch gekennzeichnet, daß die Signalisierung auf der Schicht 3 des D-Kanals mit "user busy" erfolgt.

6. Verfahren nach Anspruch 3, dadurch gekennzeichnet, daß die Signalisierung auf Schicht 3 des D-Kanals mit "Release" und "cause# user busy" erfolgt.

7. Verfahren nach einem der vorhergehenden Ansprüche, dadurch gekennzeichnet, daß dem Endgerät des anrufenden Teilnehmers ferner eine Textnachricht zugeführt wird.

8. Verfahren zur Behandlung von bei einem Endgerät eines Telekommunikationsnetzes ankommenden Anrufen, wenn eine akustische Signalisierung von ankommenden Anrufen am Endgerät abgeschaltet ist, dadurch gekennzeichnet, daß das Endgerät eine Anrufweiterleitung (Call Deflection) zu einem weiteren Endgerät mit einer im Endgerät gespeicherten Rufnummer durchführt.

9. Einrichtung zur Durchführung des Verfahrens nach einem der vorhergehenden Ansprüche, dadurch gekennzeichnet, daß an einem als Telefon ausgebildeten Endgerät ein Bedienelement zum Abschalten der akustischen Signalisierung von ankommenden Anrufen vorgesehen ist und daß in einem Mikroprozessor ein Programm abarbeitbar ist, das die Verfahrensschritte durchführt.
